# FASCICULE DE BREVET EUROPEEN

(11) **EP 3 449 059 B1**
(45) Date de publication et mention de la délivrance du brevet: **14.10.2020**
(21) Numéro de dépôt: 17725320.0
(22) Date de dépôt: 02.05.2017
(51) Int. Cl.: E01B 31/18, B23K 37/06, B23K 23/00

(54) **MOULE DE SOUDURE ALUMINOTHERMIQUE ET PROCEDE DE REPARATION**
ALUMINOTHERMISCHE SCHWEISSFORM UND REPARATURVERFAHREN
ALUMINOTHERMIC WELDING MOLD AND REPAIR METHOD

(30) Priorité: 29.04.2016 FR 1653859
(43) Date de publication de la demande: 06.03.2019
(73) Titulaire: Pandrol, 59 590 Raismes (FR)
(72) Inventeur: BORDERY, Pierre, 59690 Vieux Conde (FR); DELCROIX, Frédéric, 59171 Helemes (FR)
(74) Mandataire: Regimbeau
(86) Numéro de dépôt international: PCT/FR2017/051038
(87) Numéro de publication internationale: WO 2017/187110

(56) Documents cités:
- FR-A- 1 561 465
- FR-A1- 2 890 668
- US-A- 4 875 657

## Description

### DOMAINE DE L'INVENTION

La présente invention se rapporte à un moule de réparation de rails métalliques, notamment de rails de chemin de fer.

Elle concerne également un procédé de réparation d'un rail qui fait usage d'un tel moule.

### ARRIERE PLAN TECHNOLOGIQUE DE L'INVENTION

Dans l'ensemble de la présente demande, on utilisera le terme "patin" pour désigner la partie basse du rail qui s'appuie sur une traverse, tandis qu'on désignera respectivement par les termes "champignon" et "âme", le chemin de roulement et le filet d'orientation verticale qui relie le patin au champignon. Cette définition vaut pour tous les types de patins, qu'ils soient à profil "Vignole" ou autre.

On s'intéresse ici plus particulièrement aux rails dont la partie supérieure du champignon est dégradée.

Cette dégradation résulte le plus souvent de l'usure du rail ou d'incidents de roulement, de sorte que la surface de roulement n'est plus uniforme mais présente au contraire des irrégularités de surface qui peuvent compromettre la sécurité.

Dans de telles situations, il est connu d'intervenir sur site, de découper la portion de rail affectée par la dégradation, de la remplacer par un "coupon de rail", c'est à dire un tronçon de rail neuf et de souder ce coupon au rail préexistant.

On comprend aisément qu'une telle opération est coûteuse, fastidieuse et consommatrice de temps. Quand bien même elle se justifierait quand la dégradation est très importante, elle n'a pas de réelle raison d'être quand le défaut a une ampleur limitée en termes de profondeur et de longueur.

Toutefois, dès lors que l'on se propose de réparer directement le rail par une soudure aluminothermique, on peut se trouver confronté aux difficultés suivantes.

On connaît une procédure d'intervention sur site qui fait usage d'un moule constitué intégralement de sable. Le moule est placé de part et d'autre d'une région du rail de laquelle le défaut a été retiré, et de l'acier en fusion obtenu par réaction aluminothermique est coulé dans le moule de sorte à combler l'évidement créé par le retrait du défaut.

Le document FR 1 561 465 A divulgue un moule selon le préambule de la revendication 1 et un procédé selon le préambule de la revendication 5.

Il est généralement nécessaire de procéder à un rodage du moule en sable contre le moule pour ajuster au mieux les surfaces de contact en vue d'assurer l'étanchéité vis-à-vis du métal en fusion qui sera coulé dans le moule, qui est une condition de succès de la réparation. Cette opération est fastidieuse et ne permet pas toujours d'obtenir une étanchéité parfaite.

Par ailleurs, on ne peut exclure que le défaut à réparer se trouve dans une zone dans laquelle, au moment de la pose de la ligne ferroviaire, deux tronçons de rail ont été soudés l'un à l'autre par une soudure électrique (« flash butt welding » selon la terminologie anglo-saxonne) qui génère des surépaisseurs qui peuvent atteindre jusqu'à trois millimètres. Bien entendu, les bourrelets et autres traces de soudure présents sur le champignon ont été soigneusement éliminés par meulage notamment. Ce n'est en revanche pas le cas sur les autres parties du rail qui ne constituent pas des surfaces de roulement.

Les bourrelets résultant des soudures électriques présents ailleurs que sur le champignon pourraient être meulées avant de réparer le rail. Mais ceci est en pratique difficilement envisageable car les opérateurs disposent d'un temps réduit pour effectuer la réparation, la voie devant être fermée à la circulation pendant une durée la plus brève possible. Or, un tel meulage devrait être réalisé de manière minutieuse afin d'assurer une surface de contact parfaitement étanche entre le rail et le moule.

Dans ces conditions, on comprend aisément que ces irrégularités de surface posent des problèmes d'étanchéité dès lors que l'on se propose de réparer un rail endommagé, par soudure aluminothermique dans un moule qui enserre de part et d'autre l'ensemble du rail dans la zone abîmée.

La présente invention vise justement à combler cette lacune.

### RESUME DE L'INVENTION

Ainsi, dans un premier aspect, la présente invention se rapporte à un moule de réparation par soudure aluminothermique d'un défault de surface d'un champignon d'un rail métallique selon la revendication 1.

Selon un mode de réalisation ledit revêtement est du feutre réfractai re.

Selon un mode de réalisation, l'épaisseur dudit revêtement est comprise entre 2 et 10 mm.

De manière particulièrement avantageuse, la partie inférieure de la pièce opposée à la cavité présente une coupe biaise configurée pour éviter un contact avec un système d'attache du rail sur une traverse.

Un second aspect de l'invention est relatif à un procédé de réparation d'un rail qui présente un défaut de surface au niveau de son champignon selon la revendication 5.

Selon un mode de réalisation, l'âme présente, sensiblement au droit du défaut à réparer, un bourrelet de soudure résultant d'une soudure électrique et le revêtement compressible du moule s'applique intimement sur ledit bourrelet.

### BREVE DESCRIPTION DES DESSINS

D'autres caractéristiques et avantages de l'invention apparaîtront à la lecture de la description suivante d'un mode de réalisation préféré de l'invention. Cette description est faite en référence aux dessins annexés dans lesquels :
- la figure 1 est une vue de côté très simplifiée d'un tronçon de rail présentant un défaut de surface au niveau de sa partie de roulement (champignon), ainsi qu'une trace superficielle de soudure au niveau de son âme ;
- la figure 2 est une vue en perspective de la partie du rail de la figure 1 présentant un défaut de surface, après enlèvement d'une portion de matière qui englobe ce défaut ;
- la figure 3 est une vue analogue à la figure 2, la portion de matière enlevée ayant toutefois une forme différente ;
- la figure 4 est une figure analogue à la figure 1 montrant le rail après réparation ;
- les figures 5 et 6 sont des vues en perspective, selon deux directions différentes, d'une partie d'un moule conforme à la présente invention ;
- les figures 7 et 8 sont des vues en perspective d'un tronçon de rail à réparer, représenté relativement à une partie de moule conforme à l'invention, ledit tronçon étant visible à la figure 7 par transparence.

### DESCRIPTION DETAILLEE DE L'INVENTION

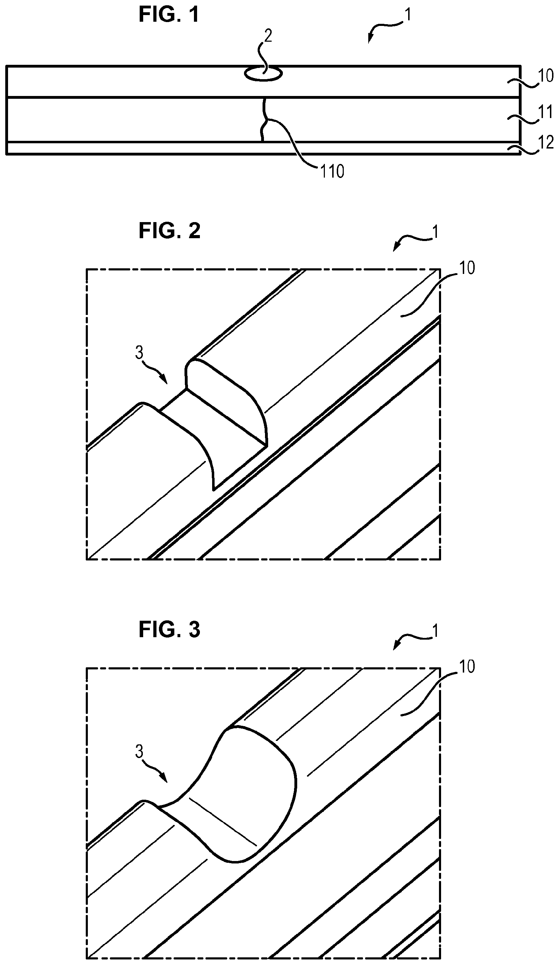

A la figure 1 est représenté schématiquement un tronçon de rail métallique de chemin de fer.

De manière bien connue en soi, ce rail comporte un champignon 10, une âme 11 et un patin 12. On a référencé 2 un défaut de surface que présente le champignon 10 au niveau de sa surface supérieure de roulement. Ce défaut occupe par exemple une surface de quelques cm².

Sensiblement au droit du défaut 2 s'étend, au niveau de l'âme 11, un bourrelet 110 de soudure résultant d'une soudure électrique. Ce bourrelet forme une irrégularité à la surface de l'âme 11.

C'est typiquement ce genre de rail que l'on se propose de réparer à l'aide du moule selon l'invention.

Aux figures 2 et 3 est visible une plus petite partie de ce même rail, représenté alors que l'on a procédé préalablement à l'enlèvement du défaut de surface 2, de sorte que l'on note la présence d'un évidement 3 à la surface du champignon 10.

La forme de l'évidement 3 est fonction de la technique qui a été utilisée pour l'opération d'enlèvement. Ainsi, en figure 2, la zone enlevée a des bords droits et perpendiculaire deux à deux, obtenus par meulage du rail, tandis qu'à la figure 3, l'évidement a un fond courbe obtenu par oxy-coupage. Cette forme n'a pas d'influence sur les caractéristiques du moule et du procédé selon la présente invention. Naturellement, l'homme du métier pourra choisir toute autre technique de retrait du défaut de surface appropriée sans pour autant sortir du cadre de la présente invention.

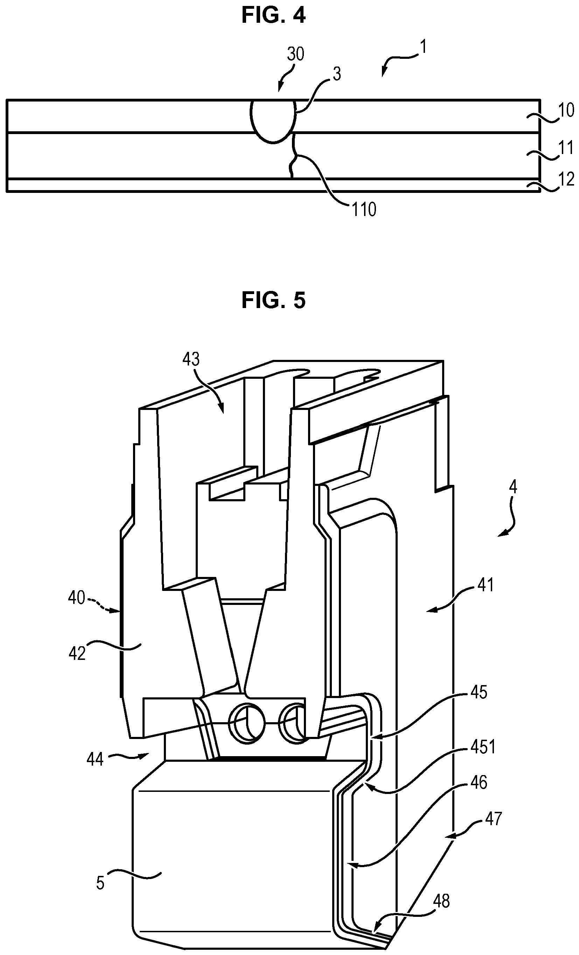

A la figure 4 est représenté ce qui constitue, en quelque sorte, l'objectif de la présente invention, en l'occurrence un rail réparé 1 qui présente un matériau de comblement 30, en lieu et place de l'évidement 3 des figures 2 et 3.

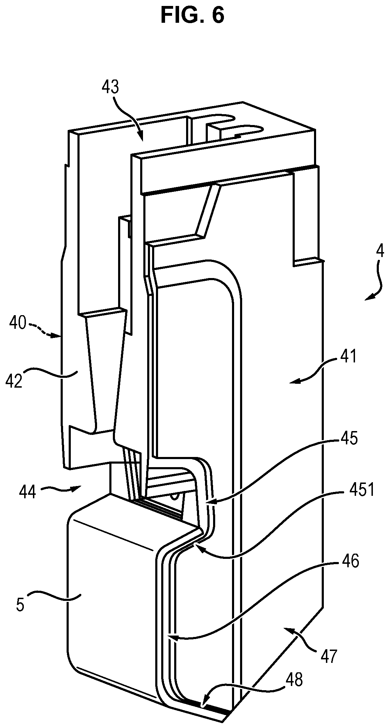

On se reportera maintenant plus spécifiquement aux figures 5 et 6 pour décrire le moule conforme à l'invention.

Ce moule est constitué de deux pièces (ou coquilles) 4 sensiblement identiques, préférentiellement et exclusivement formées de sable. On ne reviendra pas plus en détail sur la manière de fabriquer un tel moule, car elle est connue en soi et ne constitue pas le cœur de l'invention.

Pour plus de clarté, une seule pièce 4 a été représentée ici. Elle est délimitée latéralement par deux faces parallèles 40 et 41. Elle présente dans sa partie supérieure une face frontale 42 qui est divisée en deux parties disposées de part et d'autre d'une ouverture 43 qui relie la partie haute du moule avec la cavité inférieure 44 de moulage qu'il présente.

La partie inférieure du moule est organisée en deux régions : la cavité de moulage 44 destinée à être agencée autour du champignon du rail, qui est délimitée par une paroi 45, et une surface d'appui contre l'âme et le patin du rail, formée par des parois 46, 48.

La paroi 45 est configurée pour enserrer le champignon 10 du rail 1, tandis que la paroi 46 est destinée à enserrer l'âme 11 et la paroi 48 est destinée à enserrer le patin 12 du rail. La paroi 45 comprend notamment une partie 451 qui est destinée à être en contact avec le dessous du champignon.

Conformément à l'invention, la partie inférieure du moule comporte un revêtement compressible d'étanchéification 5 uniquement contre les parois 451, 46 et 48 configurées pour enserrer lesdits âme, patin et dessous du champignon, et à l'exception du reste du champignon et du dessous du patin.

Selon un mode de réalisation avantageux, ce revêtement est constitué de feutre réfractaire. Il est rendu solidaire des parois au moyen d'un adhésif. L'épaisseur du revêtement est typiquement comprise entre 2 et 10 mm.

Selon un mode de réalisation avantageux, la partie inférieure de la pièce 4 opposée à la cavité 44 présente une coupe biaise 47 plus prononcée que sur les moules de soudure aluminothermique conventionnels, pour permettre de placer le moule à n'importe quel emplacement du rail. En effet, si la réparation doit être effectuée au droit d'une soudure électrique positionnée sur une traverse, des systèmes d'attache (boulons, tirefonds, etc.) dépassent au-dessus du patin du rail. Pour éviter que les pièces du moule n'entrent en contact avec ces systèmes (ce qui rendrait impossible la mise en place du moule), ladite coupe biaise 47 est conçue pour permettre de placer ce moule sur n'importe quel système d'attache.

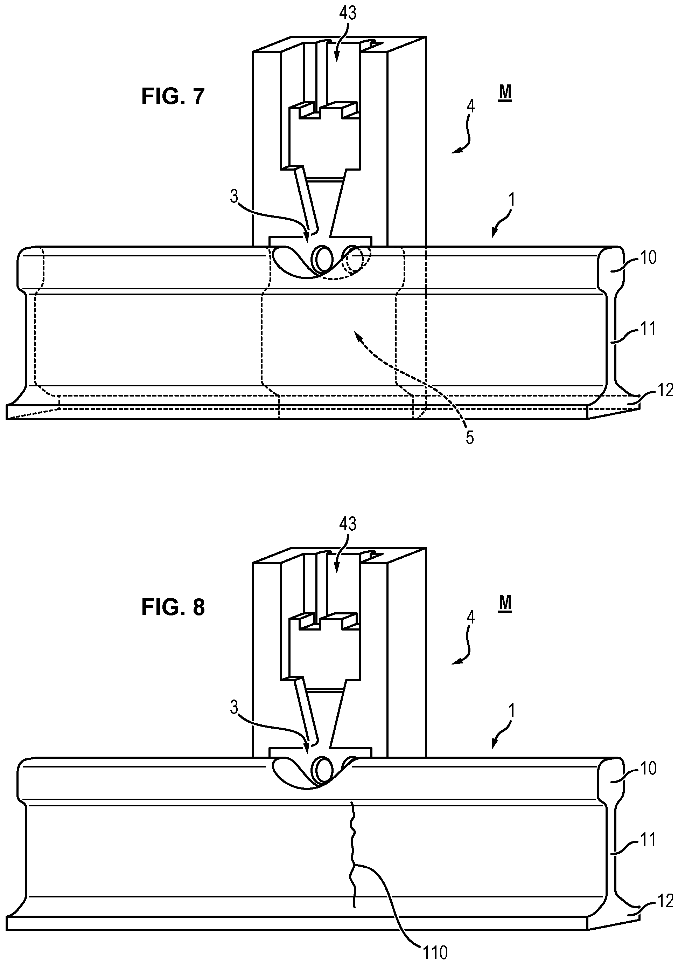

En se reportant aux figures 7 et 8, on comprend aisément comment on positionne des deux parties 4 du moule M, de part et d'autre du rail 1, de telle manière que l'ouverture 43 se trouve à la verticale de l'évidement 3.

Lorsque ce positionnement est réalisé et que l'on a mis en oeuvre toutes les opérations préparatoires à ce type d'opération, on procède à la coulée d'un matériau aluminothermique pour combler l'évidement 3.

Du fait que le revêtement compressible se situe en regard des régions susceptibles de présenter des irrégularités de surface telles que de bourrelets de soudure électrique, ce matériau se déforme et s'applique intimement contre ces irrégularités. Ce faisant, il n'existe aucun risque que le matériau en fusion ne s'écoule ailleurs que dans la région concernée, c'est à dire celle de l'évidement.

## Revendications

1. Moule (M) de réparation par soudure aluminothermique d'un défaut (2) de surface d'un champignon (10) d'un rail métallique (1), ledit moule comportant au moins deux pièces ou coquilles (4) sensiblement identiques, configurées pour être montées temporairement en regard l'un de l'autre et de part et d'autre dudit rail (1) pour enserrer les champignon (10), âme (11) et patin (12) de ce rail (1), chaque pièce ou coquille (4) présentant une ouverture supérieure (43), qui débouche sur une cavité interne (44) délimitée par des parois configurées (45, 46, 48) pour enserrer le champignon (10), l'âme (11) et le patin (12) dudit rail (1) autour du défaut (2) à réparer, **caractérisé par le fait que** ladite cavité interne (44) comporte un revêtement compressible d'étanchéification (5) uniquement contre les parois (451, 46, 48) configurées pour enserrer lesdits âme (11), patin (12) et dessous du champignon (10), et à l'exception du reste du champignon (10) et du dessous du patin (12).

2. Moule (M) selon la revendication 1, **caractérisé par le fait que** ledit revêtement (5) est du feutre réfractaire.

3. Moule (M) selon l'une des revendications 1 ou 2, **caractérisé par le fait que** l'épaisseur dudit revêtement (5) est comprise entre 2 et 10 mm.

4. Moule (M) selon l'une des revendications 1 à 3, **caractérisé par le fait que** la partie inférieure de la pièce (4) opposée à la cavité (44) présente une coupe biaise (47) configurée pour éviter un contact avec un système d'attache du rail sur une traverse.

5. Procédé de réparation d'un rail (1) qui présente un défaut de surface (2) au niveau de son champignon (10), **caractérisé par le fait qu'**il comporte les étapes suivantes qui consistent à :
- retirer ledit défaut (2) de manière à créer un évidement (3) sur le champignon (10) dudit rail (1);
- positionner les deux pièces ou coquilles (4) d'un moule (M) conforme à l'une des revendications 1 à 4 de part et d'autre de ce rail (1);
- combler ledit évidement (3) en coulant dans ledit moule (M), par ladite ouverture supérieure (43), un matériau de soudure aluminothermique.

6. Procédé selon la revendication 5, **caractérisé par le fait que** l'âme (11) présente, sensiblement au droit du défaut (2) à réparer, un bourrelet (110) de soudure résultant d'une soudure électrique et que le revêtement compressible (5) s'applique intimement sur ledit bourrelet.

## Patentansprüche

1. Reparaturform (M) per aluminothermischem Schweißen eines Oberflächenmangels (2) eines Kopfes (10) einer Metallschiene (1), wobei die genannte Form wenigstens zwei deutlich identische Teile oder Schalen (4), die ausgestaltet sind, um vorübergehend einander gegenüber und auf jeder Seite der genannten Schiene (1) montiert zu sein, um den Kopf (10), den Steg (11) und den Fuß (12) dieser Schiene (1) einzuspannen, wobei jedes Teil oder jede Schale (4) eine obere Öffnung (43) aufweist, die auf eine innere Aushöhlung (44) mündest, die von Wänden (45, 46, 48) begrenzt ist, ausgestaltet sind, um den Kopf (10), den Steg (11) und den Fuß (12) der genannten Schiene (1) um den zu reparierenden Mangel (2) einzuspannen, **gekennzeichnet durch** die Tatsache, dass die genannte innere Aushöhlung (44) eine komprimierbare Abdichtungsbeschichtung (5) nur gegen die Wände (451, 46, 48) umfasst, die zum Einspannen des genannten Stegs (11), des genannten Fußes (12) und der genannten Unterseite des Kopfes (10) und mit Ausnahme des Restes des Kopfes (10) und der Unterseite des Fußes (12) ausgestaltet sind.

2. Form (M) gemäß Anspruch 1, **gekennzeichnet durch** die Tatsache, dass die genannte Beschichtung (5) feuerfester Filz ist.

3. Form (M) gemäß einem der Ansprüche 1 oder 2, **gekennzeichnet durch** die Tatsache, dass die Dicke der genannten Beschichtung (5) zwischen 2 und 10 mm inbegriffen ist.

4. Form (M) gemäß einem der Ansprüche 1 bis 3, **gekennzeichnet durch** die Tatsache, dass das untere Stück des Teils (4) gegenüber der Aushöhlung (44) eine abgeschrägte Schale (47) aufweist, die ausgestaltet ist, um einen Kontakt mit einem Befestigungssystem der Schiene auf einer Schwelle zu vermeiden.

5. Reparaturverfahren einer Schiene (1), die einen Oberflächenmangel (2) an ihrem Kopf (10) aufweist, **gekennzeichnet, durch** die Tatsache, dass es die folgenden Schritte umfasst, die bestehen aus:
- Entfernen des genannten Mangels (2) derart, dass eine Ausnehmung (3) auf dem Kopf (10) der genannten Schiene (1) geschaffen wird,
- Positionieren der zwei Teile oder Schalen (4) einer einem der Ansprüche 1 bis 4 entsprechenden Form (M) auf jeder Seite der genannten Schiene (1);
- Auffüllen der genannten Ausnehmung (3) durch Gießen eines aluminothermischen Schweißmaterials durch die genannte obere Öffnung (43) in die genannte Form (M) .

6. Verfahren gemäß Anspruch 5, **gekennzeichnet durch** die Tatsache, dass der Steg (11) deutlich gegenüber von dem zu reparierenden Mangel (2) einen Schweißwulst (110) aufweist, der aus einem Elektroschweißen resultiert und dass die komprimierbare Oberfläche (5) eng auf den genannten Schweißwulst angewendet wird.

## Claims

1. Mold (M) for repairing by aluminothermic welding a surface defect (2) of a head (10) of a metal rail (1), said mold comprising at least two substantially identical pieces or shells (4), configured to be temporarily assembled opposite one another and on either side of said rail (1) to enclose the head (10), web (11) and foot (12) of this rail (1), each piece or shell (4) having an upper opening (43), which opens onto an internal cavity (44) bounded by walls (45, 46, 48) configured to enclose the head (10), the web (11) and the foot (12) of said rail (1), **characterized by** the fact that said internal cavity (44) comprises a compressible sealing coating (5) only against the walls (451, 46, 48) configured to enclose said web (11), foot (12) and underside of the head (10), with the exception of the rest of the head (10) and the underside of the foot (12).

2. Mold (M) according to claim 1, **characterized in that** said coating (5) is refractory felt.

3. Mold (M) according to one of claims 1 or 2, **characterized in that** the thickness of said coating (5) is comprised between 2 and 10 mm.

4. Mold (M) according to one of claims 1 to 3, **characterized in that** the lower part of the piece (4) opposite to the cavity (44) has an inclined cut (47) configured to avoid contact with a system for attaching the rail on a tie.

5. Method for repairing a rail (1) that has a surface defect (2) at the level of its head (10), **characterized by** the fact that it comprises the following steps which consist in:
- removing said defect (2) so as to create a hollowing out (3) on the head (10) of said rail (1);
- positioning the two pieces or shells (4) of a mold (M) according to one of claims 1 to 4 on either side of this rail (1);
- filling said hollowing out (3) by pouring into said mold (M), via said upper opening (43), an aluminothermic welding material.

6. Method according to claim 5, **characterized in that** the web (11) has, substantially in line with the defect (2) to be repaired, a weld seam (110) resulting from electric welding and that the compressible coating (5) is intimately applied on said seam.
